# EUROPÄISCHE PATENTSCHRIFT

(11) **EP 0 396 814 B1**
(45) Veröffentlichungstag und Bekanntmachung des Hinweises auf die Patenterteilung: **10.02.1993**
(21) Anmeldenummer: 89111954.7
(22) Anmeldetag: 30.06.1989
(51) Int. Cl.: B23P 19/04, E02D 31/02

(54) **Vorrichtung zur Herstellung von bewehrten Fugenbändern**
Device for manufacturing reinforced water-resistant strips
Dispositif pour la fabrication de bandes d'étanchéité renforcées

(30) Priorität: 10.05.1989 DE 3915230
(43) Veröffentlichungstag der Anmeldung: 14.11.1990
(73) Patentinhaber: BESAPLAST BENTLER GMBH, D-46325 Borken (DE)
(72) Erfinder: Bentler geb. Kyrudi, Eleni, D-4280 Borken (DE)
(74) Vertreter: Herrmann-Trentepohl, Werner, Dipl.-Ing.

(56) Entgegenhaltungen:
- DE-A- 2 408 514

## Beschreibung

Die Erfindung betrifft eine Vorrichtung zur Herstellung von bewehrten Fugenbändern gemäß dem Oberbegriff des Anspruches 1.

Derartige Fugenbänder wie z.B in der DE-A-2 408 514 beschrieben dienen zur Abdichtung von Gebäudefugen, insbesondere zwischen den Fundamenten und den aufgehenden Gebäudewänden. Die Bewehrung hält das mit einer Randkante z.B. in das Fundament eingegossene Band flach, so daß die andere Randkante, etwa beim Eingießen des Wandbetons stehen bleibt. Die erfindungsgemäße Vorrichtung dient zur Herstellung von außen bewehrten Fugenbändern, bei dem die Stahldrähte die Bandkanten erfassen und das Fugenband in Querrichtung stramm halten. Dadurch unterscheidet sich die Erfindung von Fugenbändern, bei denen das Kunststoffband die Bewehrungsstäbe umhüllt, die jedoch u.U. erheblich aufwendiger sind und auch andere Nachteile haben.

Die erfindungsgemäße Vorrichtung verwendet durchgehende Drähte als Bewehrungen des vorzugsweise aus PVC bestehenden Kunststoffbandes. Dabei sind die Drahtenden den Profilen der Längsränder angepaßt, welche bei dem erfindungsgemäßen Kunststoffband vorzugsweise dreieckförmig sind. Hierbei liegt die Basis des Dreiecks außen und die beiden Dreieckschenkel sind gleich lang. Die Drahtenden sind derart vorgebogen, daß sie in dieser Formgebung der Bandkanten bereits entsprechen. Im fertigen Fugenband wird dadurch erreicht, daß die Bandkanten aus den fertig gebogenen Drahtenden nicht mehr heraus- und sich die Bewehrungsdrähte auf dem Band nicht verschieben oder querstellen können. Die relativ hohen Widerstände hinreichend dicker Stahldrähte machen es jedoch erforderlich, außerdem die vorgeformten Drahtenden schon im vorgebogenen Zustand bereits so weit umzubiegen, daß die Drähte halboffene Klammern darstellen. darstellen.

Die erfindungsgemäße Vorrichtung kann diese Klammern verarbeiten, weil die Enden des Kunststoffbandes durch die Bandwölbung einander genähert und dadurch zwischen die Schenkel der vorgebogenen Drahtenden eingeführt werden können. Das nachfolgende Flachlegen des Bandes stellt die richtige Endlage der Bandkanten in den vorgebogenen Drahtenden her, die deshalb fertiggebogen werden können. Dieser Vorgang läuft an den beiden Bandkanten nacheinander ab. Das ist zweckmäßig, weil dadurch jeder Draht zunächst mit einem Ende auf dem Band fixiert und ausgerichtet wird, bevor er endgültig befestigt wird. Auf diese Weise verlaufen die fertigen Drähte senkrecht zu den Bandkanten und das Band bleibt flach.

Es hat sich herausgestellt, daß mit den für derartige Kunststoffbänder zunächst in Vorschlag gebrachten Heftapparaten profilierte Kunststoffbänder nicht mechanisch bewehrt werden können. Deshalb werden solche Fugenbänder bislang von Hand hergestellt. Hierbei wird ein Brett benutzt, das für eine gegebene, größere Bandlänge mehrere Aussparungen für vorgebogene Drähte aufweist, die im Abstand der Bewehrungen in dem Brett angebracht sind. Nachdem die erforderliche Anzahl der Drähte in die Aussparungen des Brettes eingelegt worden ist, bringt ein Arbeiter das Band mit seinen Längskanten wie beschrieben in die noch halb offenen Klammerenden ein, wozu er wegen der Steifigkeit des Bandes eine größere Bandlänge benötigt. Danach biegt er mit einer Zange zunächst die an einer Bandkante angeordneten Drahtenden aller Drähte fertig, um danach die Drahtenden der anderen Bandkante fertig zu biegen.

Hieraus entstehen zwar einwandfrei bewehrte Fugenbänder, sofern die Arbeiten von einer angelernten und sorgfältig zu Werke gehenden Arbeitskraft produziert werden. Wegen der ausschließlichen Handarbeit sind jedoch die Produktionsgeschwindigkeiten in der vorbekannten Vorrichtung unzureichend und demzufolge die Arbeitskosten zu hoch. Alle Versuche, den Anteil der Handarbeit zu senken, sind bislang gescheitert.

Der Erfindung liegt die Aufgabe zugrunde, eine selbsttätig arbeitende Vorrichtung für die Produktion der bekannten Fugenbänder zu schaffen, die mit hoher Produktionsgeschwindigkeit exakt bewehrte Fugenbänder liefert.

Diese Aufgabe löst die Erfindung mit den Merkmalen des Anspruches 1. Weitere Merkmale der Erfindung sind Gegenstand der Unteransprüche.

Gemäß der Erfindung werden die Bewehrungsdrähte einzeln an dem Kunststoffband durch das gesteuerte Zusammenwirken verschiedener Baugruppen befestigt, die für das Einbringen des Kunststoffbandes in die vorgebogenen Enden der Drähte, das Fertigbiegen und das Transportieren des Bandes um Teillängen vorgesehen sind, welche dem Drahtabstand auf dem Band entsprechen. Jede dieser Teillängen wird in einem Takt fertiggestellt, in dem die bezeichneten Baugruppen einen vollen Zyklus ihrer Bewegungen durchlaufen. Daraus ergibt sich wegen der geringen Taktzeiten eine hohe Produktionsgeschwindigkeit und ein nahezu kontinuierlicher Banddurchlauf. Ermöglicht wird dies durch das freie Biegen und Spannen des Bandes zwischen den von den Zangen erfaßten Bandkanten, weil hierdurch der Bandantrieb das Band voll erfassen kann und durch das von unten erfolgende Fertigbiegen der Drähte, weil diese deswegen von oben lediglich zugeführt zu werden brauchen, ohne daß die dafür vorgesehene Vorrichtung auch noch die vertikalen Kräfte für das Fertigbiegen der Drahtenden aufzubringen braucht.

Die Erfindung hat den Vorteil, daß sie trotz der erheblichen Produktionsgeschwindigkeiten, welche die erfindungsgemäße Vorrichtung erreicht, für jeden Zyklus ihrer Baugruppen hinreichend Zeit beläßt. Man kann die verschiedenen Bewegungsvorgänge zwar mit hydraulischer Energie durchführen, kommt dann aber zu einem vergleichsweise schwer zu beherrschenden Gesamtaufbau der Vorrichtung. Die Erfindung bietet demgegenüber auch die Möglichkeit, mit pneumatisch zugeführter Bewegungsenergie die Bewegungsabläufe der Baugruppen durchzuführen, was erheblich einfacher zu beherrschende Kräfte gestattet und einen geringeren Gesamtaufwand ermöglicht. Das Eingreifen einer Bedienungsperson in die Aufeinanderfolge beim Zusammenwirken der Baugruppen ist nicht erforderlich. Dadurch fallen die fertigen Fugenbänder in gleichbleibender Qualität an. Grundsätzlich ist die erfindungsgemäße Vorrichtung nicht von bestimmten Profilierungen des Kunststoffbandes und auch nicht von bestimmten Profilierungen seiner Bandkanten abhängig. Diese lassen sich vielmehr mit unterschiedlich vorgebogenen Drahtenden und diesen entsprechend geformten Zangen und Gesenken berücksichtigen.

Außerdem ermöglicht die Aufteilung der Baugruppen symmetrisch zur senkrechten Mittelebene des Bandes die Einstellung auf verschiedene Bandbreiten. Tatsächlich werden in der Praxis Fugenbänder unterschiedlicher Breite verwendet und müssen daher auch produziert werden.

Die hohen Produktionsgeschwindigkeiten bieten außerdem den Vorteil, die erfindungsgemäße Vorrichtung gegebenenfalls unmittelbar einem Extruder nachzuschalten, so daß diese das aus dem Wasserbad austretende Kunststoffband aufnehmen und daraus das Fugenband unmittelbar produzieren kann.

Das freie Wölben und Spannen des Kunststoffbandes in der erfindungsgemäßen Vorrichtung wird wesentlich erleichtert, wenn man die Wölbungsrichtung vorgibt. Das ist auf einfache Weise mit den Merkmalen des Anspruches 2 möglicht. Hierfür genügt ein Walzenpaar, welches infolge der Formgebung der miteinander zusammenwirkenden Walzenabschnitte die Wölbungsrichtung bestimmt.

Insbesondere wenn das Band in dieser Form vorgewölbt wird, ist es zweckmäßig, die Wölbung gegen einen festen Widerstand vorzunehmen. Mit den Merkmalen des Anspruches 3 werden die Voraussetzungen hierfür geschaffen. Dabei ist es zweckmäßig, die feste Zangenbacke der Wölbung entgegenzurichten, d.h. bei nach oben gerichteter Wölbung diese Backe von oben einwirken zu lassen, so daß die bewegliche Backe von unten auf das Band wirkt.

Das Fertigbiegen der Bewehrungsdrähtes setzt voraus, daß diese exakt in Querrichtung des Bandes ausgerichtet sind und einzeln erfaßt werden. Daher ist es zweckmäßig, mit den Merkmalen des Anspruches 4 die Drähte den Biegegesenken zuzuführen und vor dem Fertigbiegen auszurichten. Die Zuführung und das Fertigbiegen erfolgen hierbei jeweils mit eigenen Einrichtungen, so daß diese Vorgänge sich nicht gegenseitig behindern.

Die neue Vorrichtung läßt sich auf einfache Weise universell einsetzen, d.h. unabhängig von den unterschiedlichen Bandbreiten nutzen. Das ermöglichen die Merkmale des Anspruches 5. Üblich sind bisher Bandbreiten von 120, 200, 240 und 320 mm. Hierbei liegen die Drahtstärken bei ca. 4 mm.

Die Einzelheiten der Erfindung ergeben sich aus der folgenden Beschreibung einer erfindungsgemäßen Vorrichtung anhand der Figuren in der Zeichnung; es zeigen
- Fig. 1: in perspektivischer Darstellung eine Vorrichtung gemäß der Erfindung im wesentlichen in einer Seitenansicht,
- Fig. 2: einen Schnitt längs der Linie A-A der Fig. 1,
- Fig. 3: mehrere Darstellungen jeweils im Schnitt längs der Linie B-B der Fig. 1 zur Verdeutlichung der verschiedenen Bewegungsabläufe und
- Fig. 4: einen Teilschnitt längs der Linie C-C der Fig. 2.

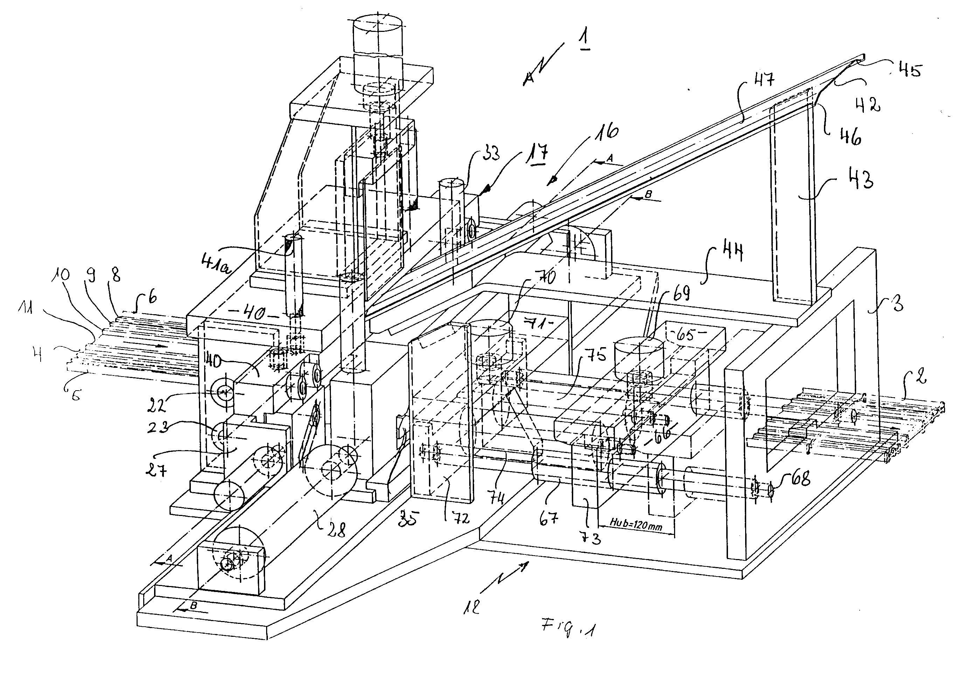

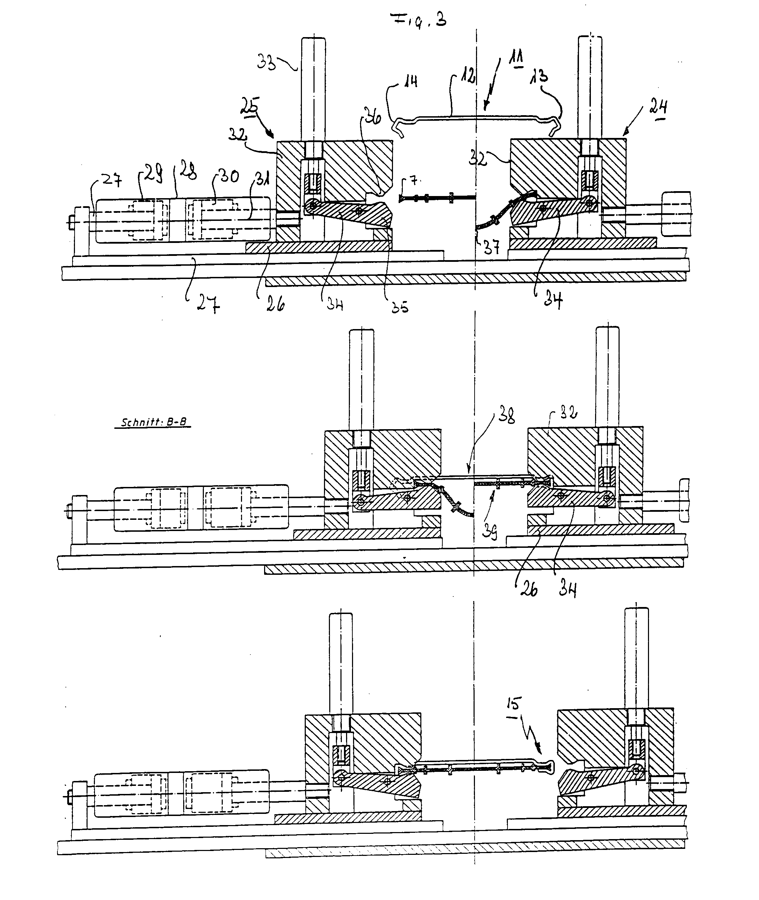

Die erfindungsgemäße Vorrichtung ist in Fig. 1 allgemein mit (1) bezeichnet. Sie dient zur Herstellung eines bewehrten Fugenbandes (2), das aus dem Maschinenrahmen (3) austritt. Dieses Fugenband wird aus einem profilierten Kunststoffband (4) hergestellt. Die Profilierung des Kunststoffbandes ergibt sich aus der Darstellung der Fig. 3. Danach weisen die beiden Bandkanten (5, 6) jeweils eine Umrißlinie (7) auf, die der eines gleichschenkligen Dreiecks entspricht. Über die Bandbreite verteilt und in symmetrischer Anordnung zur Mittelebene des Bandes sind drei Längsrippen (8-10) angeordnet, deren Querschnitt rechteckig ist und von außen nach innen zunimmt. Die Bandmitte (11) ist nicht profiliert. Das Band hat einen etwa rechteckigen Querschnitt.

Ferner wird das Fugenband mit Stahldrähten (11) armiert. Jeder Stahldraht hat einen gestreckten Mittelabschnitt (12) und vorgebogene Enden (13, 14). Die Formgebung der vorgebogenen Enden entspricht der Umrißlinie (7), jedoch sind die Drahtenden noch offen. Sobald die Drahtenden geschlossen sind, was beispielsweise bei (15) in der unteren Darstellung der Fig. 3 zu erkennen ist, bildet jeder Stahldraht (11) eine Querversteifung des Kunststoffbandes (4), die am Kunststoffband befestigt ist, so daß der betreffende Draht (11) weder in Längsrichtung des Bandes verschiebbar ist, noch sich in Querrichtung schräg stellen kann.

Zur Herstellung des bewehrten Fugenbandes weist die Vorrichtung (1) mehrere Baugruppen auf. Zunächst wird das in Pfeilrichtung der Fig. 1 der Vorrichtung (1) zugeführte Kunststoffband vogewölbt mit einer Einrichtung, welche die Wölbungsrichtung vorgibt. Dahinter sitzt eine Drahtbiegeeinrichtung (17). Am Ende der Vorrichtung sitzt ein in dem Maschinenrahmen festgelegter Bandantrieb (18).

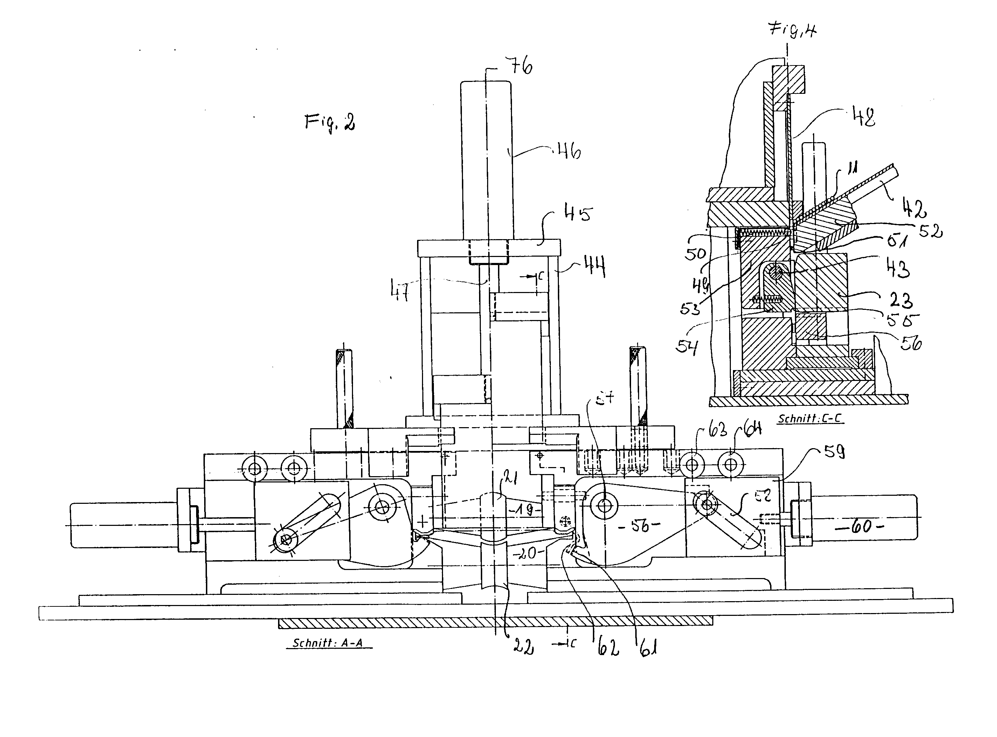

Die Einrichtung, welche die Wölbung vorgibt, weist zwei zuerst auf das Band einwirkende Walzen (19, 20) auf (Fig. 2). Die obere Walze weist einen ballenförmigen und daher konvexen, mittleren Walzenabschnitt (21) auf, dem ein konkaver, mittlerer Walzenabschnitt (22) der Walze (20) entspricht. Die Walze (20) ist als Unterwalze vorgesehen, während die Walze (19) von oben auf das Kunststoffband (4) einwirkt. Die Walzenachsen sind bei (22 und 23) in Fig. 1 zu erkennen.

Hinter der Drahtbiegeeinrichtung (17) liegt eine Bandwölbungseinrichtung (12) mit einem Paar von in Querrichtung zum Erfassen, Wölben und Spannen des Kunststoffbandes beweglichen Zangen (24, 25). Sie führen die in Fig. 3 wiedergegebenen und festgelegten Bewegungsabläufe aus. Die beiden Zangen (24 und 25) sind identisch aufgebaut und symmetrisch zur Mittelebene des Bandes (4) angeordnet. Sie sitzen auf je einem Schlitten (26), dessen Unterlage zur Festlegung der Kolbenstange (27) eines Doppelzylinders (28) dient. Der auf der äußeren (linken) Kolbenstange sitzende Kolben (29) dient zum Antrieb des Schlittens (26) über einen ersten Teilabschnitt, während der zweite Kolben (30) den Schlitten (26) um einen anderen Teilabschnitt bewegt, wobei seine Kolbenstange (31) mit der im übrigen starren, oberen Backe (33) verbunden ist. Tatsächlich ermöglicht die beschriebene Anordnung die Bewegung der Schlitten (26) über drei Teilwege.

Auf der festen Backe (32) sitzt ein Zustellzylinder (33), welcher mit seiner Kolbenstange auf das Ende einer Schwinge (34) wirkt, die eine bewegliche Zangenbacke (35) trägt. Die Zangenbacke (35) ist ebenso wie die Backe (36) der feststehenden Backe (32) entsprechend der Kante des Kunststoffbandes profiliert.

Die Ausgangsstellung der beschriebenen Bandwölbungseinrichtung ist in der linken oberen Darstellung der Fig. 3 wiedergegeben. Hierbei sind die beiden Zangenbacken (35, 36) geöffnet. Die beiden Schlitten (26) nehmen ihre am weitesten von der Bandmitte entfernte Stellung ein. Das Kunststoffband (4) ist freigegeben, so daß es von dem Bandantrieb (18) um einen Bandabschnitt durch die Maschine gezogen wird, der dem Abstand der Bewehrungsdrähte entspricht. Nachdem das Band diesen Bewegungsbetrag durchmessen hat, rücken beide Biegegesenke in die Stellung vor, die in der oberen rechten Darstellung der Fig. 3 wiedergegeben ist. Die beiden Zangenschenkel (32, 34) schließen sich um die Kanten des Bandes (4) und wölben das Band, wie bei (37) dargestellt, so weit nach unten, daß seine Längskanten in die halboffenen Enden (13, 14) eines Querdrahtes gelangen können. Nachdem der betreffende Querdraht in die Position (38) gelangt ist, die der mittleren Darstellung der Fig. 3 entspricht, wird der Schlitten (26) von dem Zylinder (28) um einen Bruchteil seiner vollen Bewegung in der Gegenrichtung zurückbewegt. Dadurch wird das Kunststoffband (4) gestrafft, wie bei (39) dargestellt und gelangt dadurch mit seinen Randkanten in die offenen Drahtenden (13, 14). In dieser Stellung werden die Drahtenden (13, 14) fertiggebogen, wobei zunächst das Drahtende (13) mit der Zange (24) und dann das Drahtende (14) mit der Zange (25) fertiggebogen wird. Am Ende dieses Vorganges nehmen die Teile ihre links unten in Fig. 3 wiedergegebene Stellung ein. Die rechts unten wiedergegebene Stellung ist die Ausgangsstellung, die links oben in Fig. 3 gezeichnet ist.

Jede Zange (24, 25) läßt sich durch Verstecken ihrer Unterlage (27) gegenüber einer maschinenfesten Führung (40) mit Hilfe der Versteckbolzen (41a) auf unterschiedliche Bandbreiten einstellen. Die Versteckbolzen wirken auf eine verstellbare Führung (40), welche mit der Unterlage (27) versperrt ist. Die Führung (40) ist Teil der Drahtbiegeeinrichtung (17), so daß für jede Maschinenseite nur eine Versteckeinrichung erforderlich ist.

Die vorgebogenen Drähte gelangen über eine feststehende Schurre (42), welche mit einer Stütze (43) auf dem Maschinenrahmen bei (44) unterstützt ist, in die für das Klammern erforderliche Ausgangsposition. Die Schurre (42) ist profiliert, d.h. mit nach unten gebogenen Rändern (45, 46) versehen, so daß die Drähte mit ihrem Mittelabschnitt (12) auf dem ebenen Schurrenboden (47) gleiten können und ihren nach unten gerichteten offenen Drahtenden (13, 14) in den Seitenteilen (45, 46) gleiten. Die Schurre (42) dient auf diese Weise als Magazin zur Aufnahme einer Vielzahl von Drähten (11).

Am unteren Ende der Schurre (42) fallen die vorgebogenen Drähte einzeln in einen Schacht (43). Über dem Schacht erhebt sich ein Joch (44), auf dessen oberer Quertraverse (45) ein Zylinder (46) befestigt ist, der mit seiner Kolbenstange (47) auf einen Schieber (48) wirkt. Der Schieber (48) füllt den Schacht (43) aus und nimmt daher bei jeder Bewegung nur einen Querdraht (11) aus der Schurre (42) in den Schacht mit. Er verdrängt dabei den querbeweglichen Vereinzelungskörper (49), welcher mit der Feder (50) in die Verschlußstellung vorgespannt ist und verschiebt den Draht durch den Schachtabschnitt (51), welcher von der Schurrenunterstützung (52) und einer Oberführung (53) gebildet wird. An der Oberführung sitzt eine bei (43) pendelnd aufgehängte obere Backe (54) eines Biegegesenkes. Sie hat eine Aussparung (55) für den inneren Rücken des Drahtendes (13 bzw. 14) und wirkt mit einer beweglichen Unterbacke (56) des Biegegesenks zusammen. Die Backe (54) wird mit dem zugeführten Draht (11) gegen eine Feder ausgelenkt, die nach Passieren des Drahtes die Ausgangslage wiederherstellt. Der Abstand der Aussparung (55) von dem Vorsprung (61) entspricht etwa dem Durchmesser des Drahtes (11). Dadurch sind die vorgebogenen Drahtenden (12, 13) nach dem Zurückfedern der oberen Backe (54) festgelegt und können fertig gebogen werden.

Die Unterbacke (56) ist bei (57) pendelnd an einem ihr gegenüber stationären Teil der Maschine aufgehängt und in einer Schlitzführung (58) eines Schiebers (59) gelagert. Der Schieber (59) ist mit der Kolbenstange eines Zylinders (60) quer zum Band beweglich. Wird der Schieber (59) in Richtung auf das Band bewegt, so dreht sich die Backe (56) um ihre Achse (57) und erfaßt mit einem Vorsprung (61) die Drahtspitze (62) des Drahtendes, um diese gegen pendelnd aufgehängte Obergesenke in der Aussparung (55) fertig zu biegen. Hierbei wird der Schieber (59) mit dem Rollenpaar (63, 64) im schinenenrahmen geführt.

Sobald das Schieberblatt (48) zurückgezogen wird, läßt es den Verschlußkörper (49) der Vereinzelungsvorrichtung in die Verschlußstellung zurückspringen, wodurch ein folgender vorgebogener Draht (11) auf den Verschlußkörper (49) gelangt. Die Backenbewegungen der Biegegesenke sind, wie aus Fig. 3 ersichtlich, mit den Zangenbewegungen synchronisiert.

In Pfeilrichtung hinter der Bandwölbungseinrichtung (16) liegt der Bandantrieb (18). Er weist einen in Bandlängsrichtung über einen dem Abstand der Bewehrungsdrähte auf dem Band entsprechenden Bandabschnitt beweglichen Schlitten (65) auf, welcher oberhalb des Bandes (2) mit einer Kufenplatte (66) und mit Hilfe von Buchsen (67) auf bandparallelen Stangen (68) geführt ist. Der Schlitten trägt einen Spannzylinder (69). Ihm entspricht ein weiterer Spannzylinder (70), der stationär auf einer Tragplatte (71) des Maschinenrahmens befestigt ist. Zwischen den Platten (71 und 65), sowie den darunter befindlichen Platten (72, 73) liegt ein Spalt, in dem das Fugenband mit den Kolbenstangen der Zylinder (69, 70) verspannt werden kann. Die Platten (65 und 73) sind mit Hilfe zweier Antriebszylinder (74, 75) in den dargestellten Hubzylindern um 120 mm hin- und herbeweglich. Hierbei arbeiten die Zylinder (69 und 70) als Tandemantrieb. Sobald sich der Schlitten (66) mit den beiden Platten (65 und 73) in seiner dem Stangenpaar (32, 35) rechten Stellung befindet, wird der Zylinder (70) entlastet und der Zylinder (69) beaufschlagt, so daß das Fugenband (2) zwischen den Platten (65 und 73) eingespannt ist. Die Zylinder (74, 75) bewegen dann den Schlitten (66) um den Hub in Richtung auf den Rahmen (3), wodurch das Band (4) um den Abstand zweier aufeinanderfolgender Stahldrähte (11) in Pfeilrichtung bewegt wird. Sobald der Schlitten (66) seinen vollen Hub durchmessen hat, wird der Zylinder (70) beaufschlagt und verspannt das Band zwischen den Platten (71 und 72). Der Zylinder (69) wird entlastet und danach mit Hilfe der Zylinder (74, 75) um den Hub zurückgestellt. Infolgedessen ist das Band während der von den Vorrichtungen (16 und 17) durchlaufenen Bewegungen eingespannt und festgelegt. Soweit die Einzelheiten der beschriebenen Baugruppen und ihrer Bewegungsvorgänge hier nur teilweise, d.h. nur für eine Maschinenhälfte beschrieben sind, gilt diese Beschreibung wegen der Spiegelsymmetrie der Maschine zur Mittelebene (76) auch für die andere Hälfte der Maschine, sowie für deren Bewegungsvorgänge.

Die beschriebenen Zylinder sind pneumatisch, können aber auch durch hydraulische Zylinder ersetzt sein. Die Zylinderbeaufschlagung wird über Ventile gesteuert. Die dazu erforderliche Folgesteuerung ist nicht wiedergegeben.

## Patentansprüche

1. Vorrichtung zur Herstellung von bewehrten Fugenbändern (2) aus einem profilierten Kunststoffband (4) und aus Stahldrähten (11) mit gestrecktem Mittelteil und vorgebogenen Enden (13, 14) zur Querversteifung des Kunststoffbandes (4), bei der das Kunststoffband (4) abschnittsweise durch Wölbung in Querrichtung verkürzt und durch Flachlegen in die vorgebogenen Enden (13, 14) der Stahldrähte (11) eingelegt wird, worauf die Enden (13, 14) nacheinander in die verdickten Längskanten (7) des Kunststoffbandes (4) fertig gebogen werden, gekennzeichnet durch das taktweise gesteuerte Zusammenwirken einer Bandwölbungseinrichtung (16), die aus einem Paar in Querrichtung zum Erfassen, Wölben und Spannen des Kunststoffbandes (4) beweglichen Zangen (32, 35) besteht, welche mit auf- und zustellbaren Backen (35, 36) versehen sind, mit einer Drahtbiegeeinrichtung (17), welche ein Paar feststehender Gesenke (54) mit von unten wirkenden Backen (46) zum Erfassen der vorgebogenen Drahtenden (13, 14) aufweist und mit einem Bandantrieb (18), welcher mit einem Paar von wechselseitig auf- und zustellbaren Bandspannern (71, 72; 65, 73) versehen ist, von denen der eine Bandspanner (71, 72) stationär hinter der Bandwölbungseinrichtung (16) und der andere über einen dem Abstand der Bewehrungsdrähte (11) auf dem Fugenband (2) entsprechenden Bandabschnitt in Bandlängsrichtung hin- und herbeweglich ist.

2. Vorrichtung nach Anspruch 1, dadurch gekennzeichnet, daß die Bandwölbungseinrichtung (16) ein zur elastischen Vorverformung des Kunststoffbandes dienendes Walzenpaar (19, 20) aus einer konkaven Unterwalze und einer konvexen Oberwalze aufweist und die Walzen (19, 20) vor der Drahtbiegeeinrichtung (17) angeordnet sind.

3. Vorrichtung nach einem der Ansprüche 1 oder 2, dadurch gekennzeichnet, daß die Zangen (32, 35) der Bandwölbungseinrichtung (16) eine feste Backe (36) und eine auf einer Schwinge (34) ausgebildete, bewegliche Backe (35) aufweisen, und daß die Backen (35, 36) entsprechend den profilierten Rändern (7) des Kunststoffbandes (4) profiliert sind.

4. Vorrichtung nach einem oder mehreren der Ansprüche 1 bis 3, dadurch gekennzeichnet, daß die Drahtbiegegesenke (54, 56) unter einem senkrechten Fallschacht (51) für die aus einem Magazin (42) zugeführten Drähte (11) angeordnet sind und der Schacht (51) mit dem pendelnd aufgehängten und in die Verschlußstellung federnd vorgespannten Obergesenk (54) verschlossen ist, über dem eine Vereinzelungsvorrichtung (49, 50) für die Drähte (11) vorgesehen ist, wobei ein im Schacht beweglicher Schieber (48) zur Betätigung der Vereinzelungsvorrichtung (49, 50) und zur Zuführung von Bewegungsenergie zum Pendeln des Obergesenkes (54) dient.

5. Vorrichtung nach einem oder mehreren der Ansprüche 1 bis 4, dadurch gekennzeichnet, daß der Schacht jeweils von den oberen Backen (25) der Zangen (32, 35) und von einer Führung (53) der Zangenzustellvorrichtung (59, 60) begrenzt ist, welche zur Betätigung der von unten wirkenden Backe (56) des Biegegesenkes dient.

6. Vorrichtung nach einem oder mehreren der Ansprüche 1 bis 5, dadurch gekennzeichnet, daß die beweglichen Backen (56) jeweils in einer schräg geneigten Schlitzführung (58) eines Schiebers (59) geführt und pendelnd aufgehängt sind.

7. Vorrichtung nach einem oder mehreren der Ansprüche 1 bis 6, dadurch gekennzeichnet, daß die Zangen (24, 25) und die Gesenke (54, 56) gemeinsam durch Versteckbolzen (41) auf unterschiedliche Bandbreiten einstellbar sind.

## Claims

1. A device for manufacturing reinforced water-resistant strips (2) from a profiled plastic strip (4) and from steel wires (11) having elongated middle sections and pre-bent ends (13, 14) for a cross bracing of the plastic strip (4), wherein the plastic strip (4) is section by section shortened by way of a curving in transverse direction and inserted in the pre-bent ends (13, 14) of the steel wires (11) by flattening it, whereby the bending of each of the ends (13, 14) in turn is completed into the thickened longitudinal edges (7) of the plastic strip (4),
**characterized by**
the cycle-wise controlled interaction of a strip curving means (16) consisting of a pair of tongs (32, 35) movable in transverse direction for grasping, curving and stretching the plastic strip (4) and provided with jaws (35, 36) adapted to be opened and closed and a wire bending means (17) provided with a pair of stationary dies (54) having jaws (46) acting from below in order to grasp the pre-bent wire ends (13, 14) and a strip drive (18) provided with a pair of strip stretching means (71, 72; 65, 73) adapted to be mutually opened and closed, with one strip stretching means (71, 72) thereof being arranged stationary behind the strip curving means (16) and the other one being adapted to be moved to and fro in the longitudinal direction of the strip via a strip section corresponding to the distance between the reinforcing wires (11) on the water-resistant strip (2).

2. A device according to claim 1,
**characterized in that**
the strip curving means (16) is provided with a pair of rollers (19, 20) serving for the elastic pre-shaping of the plastic strip and consisting of a concave lower roller and a convex upper roller and that the rollers (19, 20) are arranged before the wire bending means (17).

3. A device according to any of claims 1 or 2,
**characterized in that**
the tongs (32, 35) of the strip curving means (16) are provided with a stationary jaw (36) and a movable jaw (35) formed on a rocker arm (34) and that the jaws (35, 36) are profiled in correspondence with the profiled edges (7) of the plastic strip (4).

4. A device according to one or several of claims 1 to 3,
**characterized in that**
the wire bending dies (54, 56) are arranged below a vertical fall shaft (51) for the wires (11) supplied from a hopper (42) and that the shaft (51) is closed with the upper die (54) pendulously suspended and resiliently prestressed in the closing position, with a separating means (49, 50) for the wires (11) being arranged thereabove, wherein a slider (48) movable in the shaft serves for actuating the separating means (49, 50) and for suppying kinetic energy for the oscillating motion of the upper die (54).

5. A device according to one or several of claims 1 to 4,
**characterized in that**
the shaft is limited by the upper jaws (25) of the tongs (32, 35) and by a guidance (53) of the tongs-closing means (59, 60) which serves for actuating the jaw (56) of the bending die, said jaw acting from below.

6. A device according to one or several of claims 1 to 5,
**characterized in that**
each of the movable jaws (56) is guided in a oblique slot guidance (58) of a slider (59) and pendulously suspended.

7. A device according to one or several of claims 1 to 6,
**characterized in that**
the tongs (24, 25) and the dies (54, 56) can be jointly adjusted to various strip width using displaceable bolts (41).

## Revendications

1. Dispositif pour la fabrication de bandes d'étanchéité renforcées (2) à partir d' une bande en matière plastique profilée (4) et de fils d'acier (11) présentant une partie centrale allongée et des bouts précambrés (13,14), pour un renforcement transversal de la bande plastique (4), dans lequel la bande plastique (4) est, par segments, raccourcie par bombage dans le sens transversal et mise dans les bouts précambrés (13,14) des fils d'acier (11), par posement à plat, le cambrage des bouts (13,14) étant, après cela, successivement achevé dans les arêtes longitudinales (7) épaissies de la bande plastique (4), **characterisé par** le concours commandé en cycles des moyens de bombage de bande (16) consistant en une paire de tenailles (32,35) mobiles dans le sens transversal pour saisir, bomber et tendre la bande plastique (4), les tenailles étant munies de becs (35,36) ouvrables et fermables, et des moyens de cambrage de fil (17) munis d'une paire de matrices fixes (54) présentant des mâchoires (46) agissant d'en bas pour saisir les bouts de fil (13,14) précambrés, et d'un entrainement de bande (18) présentant une paire de tendeurs de bande (71,72;65,73) mutuellement ouvrables et fermables, l'un des tendeurs de bande (71,72) étant stationaire derrière les moyens de bombage de bande (16) et l'autre coulissant dans le sens longitudinal de la bande sur un segment de bande correspondant à la distance entre les fils de renforcement (11) sur la bande d'étanchéité (2).

2. Dispositif selon la revendication 1, **characterisé en ce que** les moyens de bombage de bande (16) présentent, pour le préformage élastique de la bande plastique, une paire de rouleaux (19,20) comportant un rouleau inférieur concave et un rouleau supérieur convexe, et en ce que les rouleaux (19,20) sont disposés devant les moyens de cambrage de fil (17).

3. Dispositif selon l'une des revendications 1 ou 2, **characterisé en ce que** les tenailles (32,35) des moyens de bombage de bande (16) présentent un bec fixe (36) et un bec mobile (35) se trouvant sur une coulisse, et en ce que les becs (35,36) sont profilés conformément aux bords profilés (7) de la bande plastique (4).

4. Dispositif selon l'une ou plusieurs des revendications 1 à 3, **characterisé en ce que** les matrices de cambrage de fil (54,56) sont disposées au-dessous d'une descente verticale (51) pour les fils (11) amenés à partir d'un magasin (42) et que la descente (51) est fermé par la matrice supérieure (54) suspendue en oscillant et prétendue élastiquement à la position fermée, des moyens de séparation (49,50) étant prévue, au-dessus de la matrice supérieure, pour les fils (11), un coulisseau (48) mobile dans la descente servant pour actionner les moyens de séparation (49,50) et pour amener de l'énergie cinétique afin d' osciller la matrice supérieur (54).

5. Dispositif selon l'une ou plusieurs des revendications 1 à 4, **characterisé en ce que** la descente est limitée par les becs supérieurs (25) des tenailles (32,35) et par un guidage (53) des moyens d'avance des tenailles (59,60), ces moyens servant pour actionner la mâchoire agissant d'en bas (56) de la matrice de cambrage.

6. Dispositif selon l'une ou plusieurs des revendications 1 à 5, **characterisé en ce que** chaque mâchoire mobile (56) est guidée dans un guidage à rainure (58) incliné d'un coulisseau (59) et suspendue en oscillant.

7. Dispositif selon l'une ou plusieurs des revendications 1 à 6, **characterisé en ce que** les tenailles (24,25) et les matrices (54,56) peuvent être réglées ensemble à differents largeurs de bande par des boulons démontables (41).
